# EUROPEAN PATENT APPLICATION

(11) **EP 2 182 389 A2**
(43) Date of publication of application: **05.05.2010**
(21) Application number: 09169853.0
(22) Date of filing: 09.09.2009
(51) Int. Cl.: G01V 3/12

(54) **Method for acquiring controlled source electromagnetic survey data to assist in attenuating correlated noise**

(30) Priority: 03.11.2008 US 290711
(71) Applicant: MTEM Limited, Edinburgh EH11 4EP (GB)
(72) Inventor: Hobbs, Bruce, Alan, Penicuilk, EH26 8PN (GB)
(74) Representative: Skone James, Robert Edmund

(57) **Abstract**

A method for acquiring transient electromagnetic survey signals includes applying a transient electric current to an electromagnetic transmitter (16A,16B) disposed above a portion of the Earth's subsurface to be surveyed. Electromagnetic signals are detected at spaced apart locations above the portion of the subsurface in response to an electromagnetic field induced in the Earth's subsurface by the applying transient current. Electromagnetic signals are detected at at least one position proximate a position of the electromagnetic transmitter such that the subsurface transient response is substantially always identifiable therefrom.

## Description

### Field of the Invention

The invention relates generally to the field of electromagnetic surveying of formations in the Earth's subsurface. More particularly, the invention relates to methods for acquiring data suitable for attenuating certain types of noise from controlled source electromagnetic survey data.

### Background Art

Electromagnetic surveying is used for, among other purposes, determining the presence of hydrocarbon bearing structures in the Earth's subsurface. Electromagnetic surveying includes what are called "controlled source" survey techniques. Controlled source electromagnetic surveying techniques include imparting an electric current or a magnetic field into the Earth, when such surveys are conducted on land, or imparting the same into the water column (or on the sea floor) when such surveys are conducted in a marine environment. The techniques include measuring voltages and/or magnetic fields induced in electrodes, antennas and/or magnetometers disposed at the Earth's surface, on the sea floor or at a selected depth in the water. The voltages and/or magnetic fields are induced by interaction of the electromagnetic field caused by the electric current and/or magnetic field imparted into the Earth's subsurface (through the water bottom or within the water column in marine surveys) with the subsurface Earth formations.

Marine controlled source electromagnetic surveying known in the art includes imparting alternating electric current into the sediments below the water bottom by applying current from a source, usually disposed on a survey vessel, to a bipole electrode towed by the survey vessel. A bipole electrode is typically an insulated electrical cable having two electrodes thereon at a selected spacing, sometimes 300 to 1000 meters or more. The alternating current has one or more selected frequencies, typically within a range of about 0.1 to 100 Hz. A plurality of detector electrodes is disposed on the water bottom at spaced apart locations, and the detector electrodes are connected to devices that record the voltages induced across various pairs of such electrodes. Such surveying is known as frequency domain controlled source electromagnetic surveying.

Another technique for electromagnetic surveying of subsurface Earth formations known in the art is transient controlled source electromagnetic surveying. In transient controlled source electromagnetic surveying, electric current can be imparted into the Earth's subsurface using electrodes on a cable similar to those explained above as used for frequency domain surveying. The electric current may be direct current (DC). At a selected time or times, the electric current is switched off, and induced voltages are measured, typically with respect to time over a selected time interval, using electrodes disposed on the water bottom as previously explained with reference to frequency domain surveying. Structure and composition of the Earth's subsurface are inferred by the time distribution of the induced voltages. t-CSEM surveying techniques are described, for example, in Strack, K.-M. (1992), Exploration with deep transient electromagnetics, Elsevier, 373 pp. (reprinted 1999).

A source of noise in controlled source electromagnetic surveying is naturally occurring electromagnetic fields called magnetotelluric fields. Magnetotelluric fields are believed to result from interaction of electromagnetic activity in the ionosphere with the electrically conducting formations in the Earth's subsurface. Correlated noise, especially magnetotelluric noise, is a particular issue in transient electromagnetic data. Magnetotelluric noise appears in such data at about 1 Hz uppermost frequency and increases in amplitude approximately as the inverse of the frequency. 1 Hz and below is the frequency band of interest of much transient controlled source electromagnetic survey data. The bandwidth of the impulse response of transient electromagnetic survey data generally decreases in frequency with respect to the depth in the subsurface of target rock formations and as the overburden (materials above the target) become more electrically conductive. In shallow water (approx 100 m) marine electromagnetic survey data, for example, the water has almost no attenuating effect on the magnetotelluric fields. This is in contrast to water of 2 km depth or more where the magnetotelluric field noise at the sea floor is greatly attenuated by the layer of conductive sea water.

It is known in the art that the magnetotelluric field noise, specifically, the induced electric field therefrom, is substantially coherent over quite large distances, as shown in noise records from survey data recorded in the North Sea. See, for example, Wright, D and Ziolkowski, A., 2007, Suppression of noise in multi transient EM data, Expanded Abstracts, SEG San Antonio Annual Meeting. Techniques for attenuating correlated noise are known in the art. Some of such techniques may make use of recorded transient electromagnetic signals having suitably high signal to noise ratio to be able to identify those portions of signals recorded at each of a plurality of sensors that are attributable to the transient response so as to be able to identify and attenuate the correlated noise response.

It is desirable to have a method for acquiring electromagnetic signals in which signal response from at least one receiver or detector has sufficient signal to noise ratio to be able to perform correlated noise attenuation methods.

### Summary of the Invention

A method for acquiring transient electromagnetic survey signals according to one aspect of the invention includes applying a transient electric current to an electromagnetic transmitter disposed above a portion of the Earth's subsurface to be surveyed. Electromagnetic signals are detected at spaced apart locations above the subsurface portion in response to an electromagnetic field induced in the Earth's subsurface by the applying transient current. Electromagnetic signals are detected at at least one position proximate a position of the electromagnetic transmitter such that the subsurface transient response is substantially always identifiable therefrom.

Other aspects and advantages of the invention will be apparent from the following description and the appended claims.

### Brief Description of the Drawings

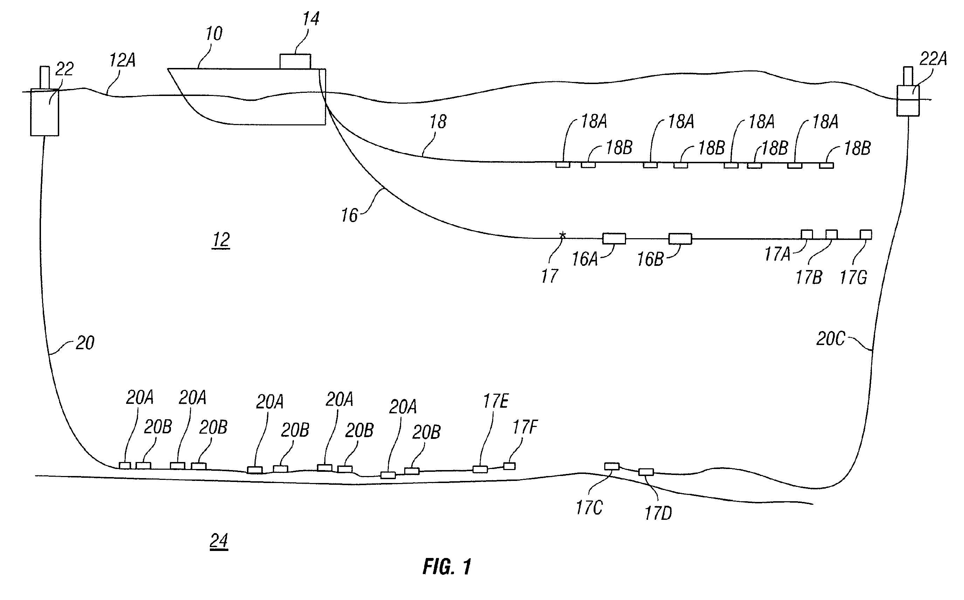

FIG. 1 shows schematically an example of marine electromagnetic surveying.

### Detailed Description

FIG. 1 shows examples of marine electromagnetic survey systems that may acquire transient controlled source electromagnetic survey signals according to the invention. The system may include a survey vessel 10 that moves along the surface 12A of a body of water 12 such as a lake or the ocean. The vessel 10 may include thereon equipment, referred to for convenience as a "recording system" and shown generally at 14, for generating electromagnetic signals to be imparted into formations 24 below the bottom of the water 12 and for recording responses therefrom detected by various electromagnetic receivers (explained below). The recording system 14 may include (none shown separately for clarity of the illustration): navigation devices to determine the geodetic position of the vessel 10; for determining geodetic position and/or heading of one or more electromagnetic transmitters and receivers (described below); devices for imparting electric current to the transmitter(s); and data storage equipment for recording signals detected by the one or more receivers.

The electromagnetic transmitter in the present example may be a bipole electrode, shown at 16A, 16B disposed along a cable 16 towed by the vessel 10. In other examples, the transmitter cable 16 may be disposed on the water bottom. At selected times, the recording system 14 may pass electric current through the electrodes 16A, 16B. The current is preferably configured so that its passage through the transmitter (electrodes 16A, 16B) induces transient electromagnetic fields in the formations 24. Examples of such current include switched direct current, wherein the current may be switched on, switched off, reversed polarity, or an extended set of switching events such as a pseudo random binary sequence ("PRBS"). In the present example, the vessel 10 may tow one or more receiver cables 18 having thereon receivers. In one example, each of the receivers can each be a bipole electrode 18A, 18B, and a plurality of such bipole electrode receivers are typically disposed at spaced apart positions along the receiver cable 18. The bipole electrodes 18A, 18B will have voltages imparted across them related to, among other things, the amplitude of the electric field component of the electromagnetic field emanating from the formations 24. The recording system 14 on the vessel 10 may include, as explained above, devices for recording signals generated by the receivers (electrodes 18A, 18B). The recording of each receiver's response is typically indexed with respect to a reference time such as a current switching event in the transmitter current. A sensor 17 such as a magnetic field sensor (magnetometer) or current meter may be disposed proximate the transmitter, for example at a selected position in the transmitter cable 16, and such sensor may be used to measure a parameter related to the amount of current flowing through the transmitter. The measurements from such sensor may be used in processing the receiver signals as explained below.

In the present example, in substitution of or in addition to the receiver cable 18 towed by the vessel 10, a water bottom cable 20 may be disposed along the bottom of the water 12, and may include a plurality of receivers such as bipole electrodes 20A, 20B similar in configuration to the electrodes 18A, 18B on the towed receiver cable 18. The electrodes 20A, 20B may be in signal communication with a second vessel (not shown) or with a recording buoy 22 or similar device either near the water surface 12A or on the water bottom that may record signals detected by the electrodes 20A, 20B.

In a method according to the invention, electromagnetic signals may also be measured using what may be referred to as a "near field" receiver. Examples of such near field receivers may include a bipole electrode 17A, 17B disposed near or at an end of the transmitter cable 16. Another example may include a bipole electrode disposed on the water bottom receiver cable 20, for example, as shown at 17E and 17F. Another example is a bipole electrode disposed on a receiver cable 20C deployed on the water bottom and coupled to a second recording buoy 22A. Any or all of such near field receivers may be used in any particular implementation. It is contemplated that at any time a distance between the transmitter (electrode pair 16A, 16B) and any one or more of the near field receivers will not exceed an amount such as will ensure sufficient signal to noise ratio to perform correlated noise attenuation techniques known in the art. While the distance between the transmitter and one or more of the near field receivers in any example will depend on factors such as the depth of the body of water, the depth of target formations in the subsurface and the distance between the transmitter and the other electromagnetic receivers, a distance typically at least three times and not exceeding about 10 times the distance between the current electrodes 16A, 16B in the transmitter is believed to provide adequate signal to noise for most purposes. In some examples the distance between the transmitter and the one or more near field receivers is at most about 2000 meters. Any time dependence of the distance between the transmitter and a particular near field receiver is a result of movement of the transmitter through the water as the vessel moves, as may be inferred from the above description.

The implementation in which the near field receiver is disposed at the end of the transmitter cable 16, for example, receiver electrode pair 17A and 17B has the advantage of providing substantially constant distance between the transmitter and the near field receiver. As will be appreciated by those skilled in the art, passage of high transient current along the transmitter cable 16 may result in induction noise in electrical conductors used to communicate signals from the near field receiver. In such event, it may be advantageous to provide a recording device 17G to record signals from the near field receiver 17A, 17B on the transmitter cable 16. Such recording device 17G is preferably disposed opposite to the end from which current is applied to the transmitter. Such arrangement may substantially avoid or reduce electromagnetic induction effects on the near field receiver from within the transmitter cable 16 itself.

In another example as mentioned above, a separate near field receiver may be deployed on the water bottom using the second receiver cable 20C coupled to the associated second recording buoy 22A. The second receiver cable 20C may include as the near field receiver an electrode pair 17C, 17D at a selected position along the second receiver cable 20C. In such example, the electrode pair 17C, 17D may be disposed such that during the survey the distance between the near field receiver (electrodes 17C and 17D) and the transmitter (electrodes 16A, 16B) typically does not exceed about 10 times the distance between the transmitter electrodes 16A, 16B.

Irrespective of the type of near field receiver used in any example, it is contemplated that the distance between the near field receiver and the transmitter will be kept within such amount so as to be able to substantially always identify the subsurface transient response in the near field receiver response.

It will be appreciated by those skilled in the art that the invention is not limited in scope to the transmitter and receiver arrangements shown in FIG. 1. Other examples may use, in substitution of or in addition to the bipole electrodes shown in FIG. 1, wire coils or wire loops for the transmitter to impart a time varying electromagnetic field into the formations 24. The receiver cables 18, 20 may include other sensing devices, such as magnetometers or wire loops or coils to detect the magnetic field component of the induced electromagnetic field from the formation 24.

Methods according to the invention may provide controlled source electromagnetic survey measurements that can be processed to have reduced effect of correlated noise, such as magnetotelluric noise.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for acquiring transient electromagnetic survey signals, comprising:
applying a transient electric current to an electromagnetic transmitter disposed in a body of water;
detecting electromagnetic signals at spaced apart locations in the body of water in response to an electromagnetic field induced in the Earth's subsurface by the applying transient current; and
detecting electromagnetic signals at at least one position proximate a position of the electromagnetic transmitter such that the subsurface transient response is substantially always identifiable therefrom.

2. The method of claim 1 wherein the at least one position proximate the position of the transmitter is on a cable used to deploy the transmitter.

3. The method of claim 2 wherein the signals detected at the at least one proximate position are recorded by a device disposed at an end of the transmitter cable opposite an end thereof into which the transient electric current is applied.

4. The method of claim 2 or claim 3 wherein a distance between the at least one proximate position and the electromagnetic transmitter is about 2000 meters.

5. The method of claim 1 wherein the at least one position proximate the position of the transmitter is on a receiver cable towed by a survey vessel in the body of water.

6. The method of claim 1 wherein the at least one position proximate the position of the transmitter is on a receiver cable disposed on a bottom of the body of water.

7. The method of claim 1 wherein the at least one proximate position is at most about 10 times a distance between opposed bipole elements of the transmitter.

8. A method for acquiring transient electromagnetic survey signals, comprising:
applying a transient electric current to an electromagnetic transmitter disposed above a portion of the Earth's subsurface to be surveyed;
detecting electromagnetic signals at spaced apart locations above the portion of the subsurface in response to an electromagnetic field induced in the Earth's subsurface by the applying transient current; and
detecting electromagnetic signals at at least one position proximate a position of the electromagnetic transmitter such that the subsurface transient response is substantially always identifiable therefrom.

9. The method of claim 8 wherein the at least one position proximate the position of the transmitter is on a cable used to deploy the transmitter.

10. The method of claim 9 wherein the signals detected at the at least one proximate position are recorded by a device disposed at an end of the transmitter cable opposite an end thereof into which the transient electric current is applied.

11. The method of claim 9 or claim 10 wherein a distance between the at least one proximate position and the electromagnetic transmitter is about 2000 meters.

12. The method of claim 8 wherein the at least one position proximate the position of the transmitter is on a receiver cable.

13. The method of claim 8 wherein the at least one proximate position is at most about 10 times a distance between opposed bipole elements of the transmitter.
